# EUROPÄISCHE PATENTANMELDUNG

(11) **EP 3 756 816 A1**
(43) Veröffentlichungstag der Anmeldung: **30.12.2020**
(21) Anmeldenummer: 19182998.5
(22) Anmeldetag: 27.06.2019
(51) Int. Cl.: B23K 26/12, B23K 9/04, B23K 26/14, B23K 26/348, B33Y 10/00, B33Y 30/00

(54) **VERFAHREN UND VORRICHTUNG ZUR ADDITIVEN FERTIGUNG EINES FORMKÖRPERS AUS METALL**

(71) Anmelder: FRONIUS INTERNATIONAL GmbH, 4643 Pettenbach (AT)
(72) Erfinder: MAYER, Manuel, 4643 Pettenbach (AT); WALDHÖR, Andreas, 4643 Pettenbach (AT); GRUNWALD, Rick, 4643 Pettenbach (AT)
(74) Vertreter: Sonn & Partner Patentanwälte

(57) **Zusammenfassung**

Die Erfindung betrifft ein Verfahren und eine Vorrichtung (1) zur additiven Fertigung eines Formkörpers (2) aus Metall durch Aufschmelzen eines drahtförmigen metallischen Ausgangsmaterials (3) mittels eines in einem Schweißbrenner (4) erzeugten Lichtbogens (L) innerhalb einer Kammer (5) mit einem sekundären Schutzgas (G₂). Zur Verbesserung der Fertigungseigenschaften insbesondere bei der Fertigung von Formkörpern (2) aus Nichteisenmetallen mit Affinität zu Sauerstoff, beispielsweise Titan oder Nickel oder deren Legierungen, ist der Schweißbrenner (4) zur Durchströmung mit einem primären Schutzgas (G₁) zur Umströmung des Lichtbogens (L) ausgebildet, wobei eine Einrichtung (7) zur Bündelung des primären Schutzgases (G₁) vorgesehen ist.

## Beschreibung

Die Erfindung betrifft ein Verfahren zur additiven Fertigung eines Formkörpers aus Metall durch Aufschmelzen eines drahtförmigen metallischen Ausgangsmaterials mittels eines in einem Schweißbrenner erzeugten Lichtbogens innerhalb einer Kammer mit einem sekundären Schutzgas.

Weiters betrifft die Erfindung eine Vorrichtung zur additiven Fertigung eines Formkörpers aus Metall durch Aufschmelzen eines drahtförmigen metallischen Ausgangsmaterials mittels eines in einem Schweißbrenner erzeugten Lichtbogens innerhalb einer Kammer mit einem sekundären Schutzgas.

Die Erfindung bezieht sich insbesondere auf die additive Fertigung von Formkörpern aus Nichteisenmetallen, welche eine Affinität zu Sauerstoff haben. Im Besonderen sind Titan und Nickel sowie deren Legierungen genannt. Derartige Materialien oxidieren sehr stark, weshalb der Schweißvorgang bzw. der Auftragsvorgang unter einer Schutzgasatmosphäre stattfinden muss, bis das Material jene kritische Temperatur unterschritten hat, oberhalb welcher es zu einer bauteilschädlichen Oxidation kommt.

Beim normalen Schweißen oder Beschichten metallischer Werkstücke mit derartigen Nichteisenmetallen, welche eine Affinität zu Sauerstoff haben, werden sogenannte Schleppgasdüsen eingesetzt, mit Hilfe derer die Schweißnaht bis zur Abkühlung unter die kritische Temperatur mit einem Schutzgas, dem sogenannten sekundären Schutzgas, umgeben wird, sodass eine Oxidation durch Sauerstoff verhindert werden kann.

Beispielsweise beschreibt die US 4,599,505 A eine derartige Schleppgasdüse mit einer porösen Struktur für eine gute Verteilung des sekundären Schutzgases über den nachlaufenden Schweißbereich.

Bei der additiven Fertigung eines dreidimensionalen Formkörpers aus Metall bzw. 3D-Druck metallischer Werkstoffe eignet sich die Anwendung einer Schleppgasdüse aufgrund der Geometrie des herzustellenden Formkörpers nicht. Aus diesem Grund ist ein ausreichender Gasschutz nur innerhalb einer Kammer mit dem sekundären Schutzgas möglich.

Beispielsweise beschreibt die DE 10 2015 108 131 A1 ein Verfahren und eine Vorrichtung zum Herstellen von Formkörpern mittels eines additiven Fertigungsverfahrens, wobei das metallische Ausgangsmaterial mit Hilfe eines Lichtbogens innerhalb einer Schutzgaskammer aufgeschmolzen wird.

Aufgrund von Instabilitäten des Lichtbogens sind Formkörper nur bis zu einer begrenzten Auflösung herstellbar. Ungenauigkeiten bei der Herstellung derartiger Formkörper können zwar durch entsprechende Nachbearbeitungen reduziert werden, was jedoch den Herstellungsaufwand, insbesondere in der Kammer mit dem Schutzgas erhöht und die Gestaltungsmöglichkeiten für den herzustellenden Formkörper einschränkt.

Beispielsweise beschreibt die EP 3 266 543 A1 ein Verfahren und eine Anlage zur kombiniert, additiven und umformenden Fertigung, wobei mittels Walzen eine Umformung des abgeschiedenen metallischen Ausgangsmaterials unmittelbar nach dem Abscheiden und Erstarren vorgenommen wird. Wie bereits erwähnt ist der relativ hohe Aufwand nachteilig und das Umformverfahren lässt sich nicht bei beliebig gestalteten Formkörpern anwenden.

Die Aufgabe der vorliegenden Erfindung besteht in der Schaffung eines oben genannten Verfahrens und einer oben genannten Vorrichtung zur additiven Fertigung eines Formkörpers aus Metall durch Aufschmelzen eines drahtförmigen metallischen Ausgangsmaterials, bei welchen die Stabilität des Lichtbogens zum Aufschmelzen des drahtförmigen metallischen Ausgangsmaterials verbessert werden kann und dadurch die Auflösung bzw. Formtreue des herzustellenden Formkörpers erhöht werden kann. Eine Nachbearbeitung des aufgeschmolzen drahtförmigen metallischen Ausgangsmaterials soll nicht erforderlich sein. Der Aufwand und die Kosten sollen möglichst gering sein, um eine breite Anwendung zu ermöglichen. Nachteile bekannter Verfahren und Vorrichtungen sollen vermieden oder zumindest reduziert werden.

Gelöst wird die erfindungsgemäße Aufgabe in verfahrensmäßiger Hinsicht dadurch, dass der Schweißbrenner zur Umströmung des Lichtbogens von einem primären Schutzgas durchströmt wird, wobei das primäre Schutzgas gebündelt wird. Das erfindungsgemäße Verfahren kombiniert die additive Fertigung innerhalb einer Kammer mit einem sekundären Schutzgas mit einem Schweißbrenner, der von einem gebündelten primären Schutzgasstrom durchströmt wird. Das gebündelte bzw. fokussierte primäre Schutzgas dient zur Stabilisierung des Lichtbogens, mit dem das drahtförmige metallische Ausgangsmaterial aufgeschmolzen wird. In Folge dessen können Formkörper aus Metall mit höherer Genauigkeit und ohne dem Erfordernis einer Nachbearbeitung hergestellt werden. Der primäre Schutzgasstrom dient maßgeblich der Fokussierung des Lichtbogens, während das sekundäre Schutzgas das erwärmte metallische Ausgangsmaterial vor Oxidation schützt. Abgesehen vom geringfügig erhöhten Schutzgasbedarf durch das primäre Schutzgas ist der Aufwand für das Verfahren relativ gering. Für das primäre und sekundäre Schutzgas können verschiedene aber auch identische Gase zum Einsatz kommen, wobei diese an das metallische Material des Ausgangsmaterials, aus dem der Formkörper hergestellt wird, entsprechend angepasst werden.

Vorteilhafterweise wird das primäre Schutzgas mit einer Strömungsgeschwindigkeit von 2 l/min bis 15 1/min, vorzugsweise mit 6 1/min bis 10 1/min, in den Schweißbrenner eingeströmt. Durch derartige hohe Strömungsgeschwindigkeiten des primären Schutzgases kann der Lichtbogen zum Aufschmelzen des drahtförmigen metallischen Materials entsprechend gut stabilisiert werden. Die Strömungsgeschwindigkeit kann durch entsprechende konstruktive Maßnahmen am Schweißbrenner, wie z.B. einem verjüngend ausgebildeten Strömungskanal und einer kleinen Mündungsöffnung, erzielt oder unterstützt werden.

Gemäß einem weiteren Merkmal der Erfindung wird der Schweißbrenner mit einem Kühlfluid gekühlt. Auch eine entsprechende Kühlung des Schweißbrenners trägt zur Verbesserung der Stabilität des Lichtbogenprozesses bei. Zur Kühlung kommt hauptsächlich Wasser, allenfalls mit entsprechenden Zusätzen, zur Anwendung. Durch die Kühlung des Schweißbrenners wird auch eine schnellere Abkühlung des hergestellten Formkörpers erzielt und somit die kritische Temperatur, unterhalb der keine Oxidation des Materials mehr stattfindet, schneller erreicht. In der Folge resultieren weniger Defekte und eine gleichmäßigere Oberfläche des herzustellenden Formkörpers.

Wenn das drahtförmige metallische Ausgangsmaterial mit einer konstanten Drahtfördergeschwindigkeit in Richtung Formkörper gefördert wird, kann der Aufwand für die Förderung des drahtförmigen metallischen Ausgangsmaterials gering gehalten werden.

Alternativ dazu kann das drahtförmige metallische Ausgangsmaterial auch mit einer reversierenden Drahtfördergeschwindigkeit in Richtung Formkörper gefördert bzw. vom Formkörper wegbewegt werden. Durch eine Vor- und Rückbewegung des drahtförmigen metallischen Ausgangsmaterials, wie es beispielsweise beim sogenannten CMT (Cold Metal Transfer)-Schweißverfahren zur Anwendung kommt, kann die Stabilisierung des Lichtbogens beim Schweißprozess noch weiter verbessert werden, es entstehen weniger Schweißspritzer und es kann eine bessere Optik der Schweißnaht erzielt werden.

Als primäres Schutzgas und bzw. oder als sekundäres Schutzgas wird vorzugsweise ein inertes Gas, beispielsweise Argon oder Helium, oder Gemische aus diesen Gasen verwendet. Wie bereits oben erwähnt kann je nach Anwendung und je nach verwendetem metallischen Ausgangsmaterial, aus dem der Formkörper hergestellt werden soll, eine bestimmte Kombination des primären und sekundären Schutzgases zum Einsatz kommen, wobei verschiedene Schutzgase oder idente Schutzgase zur Anwendung kommen können.

Der Lichtbogen kann durch einen in einer Lasereinheit erzeugten Laserstrahl noch mehr stabilisiert werden. Durch die Lasereinheit wird ein sogenannter Laser-Hybrid-Schweißbrenner geschaffen. Zusätzlich zur Stabilisierung des Lichtbogens durch den Laserstrahl kann auch der Wärmeeintrag in das drahtförmige metallische Ausgangsmaterial erhöht werden. In der Regel wird der Lichtbogen an dem Auftreffpunkt des Lasers fixiert, wohingegen bei ausgeschaltetem Laser ein zufälliges Wechseln des Fußpunkts des Lichtbogens bzw. ständiges Bewegen des Lichtbogens resultieren würde.

Gelöst wird die erfindungsgemäße Aufgabe auch durch eine oben genannte Vorrichtung, wobei der Schweißbrenner zur Durchströmung mit einem primären Schutzgas zur Umströmung des Lichtbogens ausgebildet ist, wobei eine Einrichtung zur Bündelung des primären Schutzgases vorgesehen ist. Zu den dadurch erzielbaren Vorteilen wird auch die obige Beschreibung des erfindungsgemäßen Verfahrens verwiesen. Die Vorrichtung zur additiven Fertigung eines Formkörpers aus Metall ist mit relativ geringem konstruktiven Aufwand herstellbar. Durch die Stabilisierung des Lichtbogens mit Hilfe des gebündelten primären Schutzgases, kann auch der Abstand zwischen Schweißbrenner und herzustellendem Formkörper und somit die Lichtbogenlänge reduziert werden und der Formkörper mit höherer Genauigkeit bzw. größerer Auflösung gefertigt werden.

Die Einrichtung zur Bündelung des primären Schutzgases im Schweißbrenner kann durch einen in Richtung Formkörper verjüngend ausgebildeten Kanal für das primäre Schutzgas gebildet sein. Dies stellt eine einfache Maßnahme zur Erhöhung der Strömungsgeschwindigkeit des primären Schutzgases dar.

Idealerweise beträgt der Durchmesser der Mündung des Kanals für das primäre Schutzgas zwischen 3 mm und 10 mm, vorzugsweise 4 mm bis 6 mm. Durch eine derartige kleine Mündung des Kanals für das primäre Schutzgas wird die Stabilisierung des Lichtbogens noch weiter verbessert und auch der Verbrauch an primärem Schutzgas reduziert.

Wenn die Kammer mit dem sekundären Schutzgas zumindest einen Deckel mit einer Öffnung für die Einbringung des Schweißbrenners aufweist, wobei der zumindest eine Deckel gegenüber der Kammer verschiebbar angeordnet ist, kann die Kammer trotz der Möglichkeit einer Bewegung des Schweißbrenners abgedichtet und der Verbrauch an sekundärem Schutzgas reduziert werden.

Dabei ist es von Vorteil, wenn zwischen dem verschiebbaren Deckel und der Kammer eine elastische Dichtung angeordnet ist. Diese elastische Dichtung zwischen Deckel und Kammer kann beispielsweise durch einen Faltenbalg oder ein Industrierollo gebildet sein. Durch diese relativ einfach realisierbare Maßnahme kann der Verbrauch an sekundärem Schutzgas durch undichte Stellen vermieden bzw. reduziert werden. Nach der Fertigstellung des Formkörpers muss natürlich der Deckel von der Kammer abgenommen werden und vor Beginn eines neuen Herstellungsvorgangs die Kammer wieder mit dem sekundären Schutzgas gefüllt werden. Durch entsprechende konstruktive Maßnahmen kann die Kammer an die Geometrie des herzustellenden Formkörpers angepasst werden. Beispielsweise können die Wände der Kammer auch verstellbar ausgeführt werden, sodass das Volumen der Kammer an den Formkörper angepasst und nicht wesentlich größer als das Volumen des herzustellenden Formkörpers gestaltet werden muss.

Zur Kühlung des Schweißbrenners kann in diesem zumindest ein Kühlkanal zur Führung eines Kühlfluids vorgesehen sein. Wie bereits oben erwähnt wird die Stabilität des Lichtbogenprozesses durch entsprechende Kühlung des Schweißbrenners verbessert und auch die Abkühlung des herzustellenden Formkörpers beschleunigt. Als Kühlfluid kommt insbesondere Kühlwasser, allenfalls mit entsprechenden Zusätzen, zur Anwendung.

Der Abstand zwischen der Spitze eines Kontaktrohres des Schweißbrenners und dem zu bildenden Formkörper kann zwischen 7 mm und 17 mm, vorzugsweise zwischen 10 mm und 15 mm, betragen. Derartige geringe Distanzen stabilisieren den Lichtbogen. Aufgrund der daraus resultierenden geringeren Lichtbogenlänge wird auch die Gefahr von Schweißspritzern und dadurch resultierende Verschmutzungen des Schweißbrenners und des Formkörpers verringert.

Mittels einer Lasereinheit zur Erzeugung eines Laserstrahls kann der Lichtbogens zum Aufschmelzen des drahtförmigen metallischen Ausgangsmaterials noch weiter stabilisiert werden.

Die vorliegende Erfindung wird anhand der beigefügten Zeichnungen näher erläutert. Darin zeigen:
- Fig. 1: eine teilweise geschnittene Ansicht einer Vorrichtung zur additiven Fertigung eines Formkörpers aus Metall mit einem innerhalb einer Kammer mit dem sekundären Schutzgas angeordneten Schweißbrenner;
- Fig. 2: den Schweißbrenner gemäß Fig. 1 in teilweise geschnittener Ansicht;
- Fig. 3: ein Teil des Schweißbrenners in vergrößerter geschnittener Darstellung; und
- Fig. 4: ein Blockschaltbild einer Vorrichtung zur additiven Fertigung eines Formkörpers mit einer zusätzlichen Lasereinheit.

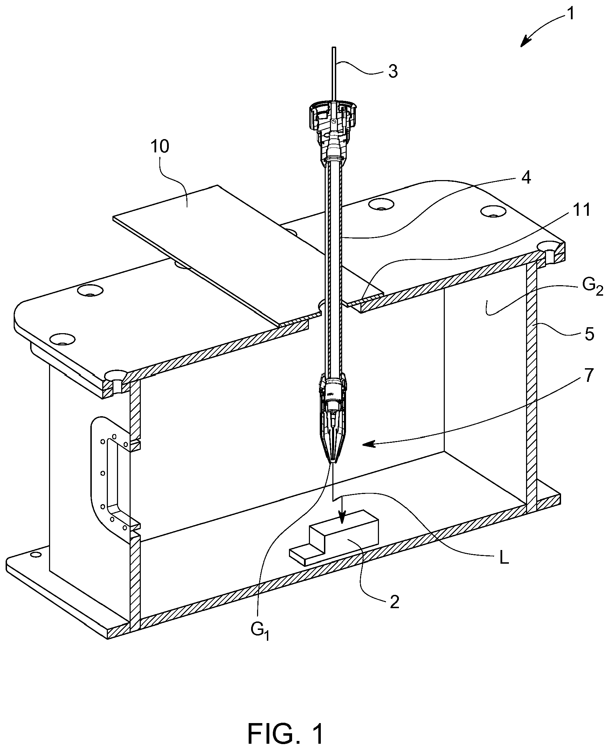

In Fig. 1 wird eine Ausführungsform einer Vorrichtung 1 zur additiven Fertigung eines Formkörpers 2 aus Metall in geschnittener Ansicht dargestellt. Beim Fertigungsverfahren kann es sich beispielsweise um ein sogenanntes WAAM (Wire Arc Additiv Manufacuring)-Verfahren oder ein ähnliches 3D-Druckverfahren, bei dem ein metallischer dreidimensionaler Formkörper hergestellt wird, handeln. Die Vorrichtung 1 beinhaltet einen Schweißbrenner 4 zum Aufschmelzen eines drahtförmigen metallischen Ausgangsmaterials 3 mit Hilfe eines Lichtbogens L innerhalb einer Kammer 5, die mit einem sekundären Schutzgas G₂ gefüllt ist. Erfindungsgemäß wird ein Schweißbrenner 4 verwendet, der mit einem primären Schutzgas G₁ durchströmt wird, wobei eine Einrichtung 7 zur Bündelung des primären Schutzgases G₁ vorgesehen ist. Durch diese Bündelung bzw. Fokussierung des primären Schutzgases G₁ kann eine Stabilisierung des zwischen herzustellendem Formkörper 2 und Spitze des Schweißbrenners 4 bzw. freiem Ende des drahtförmigen metallischen Ausgangsmaterials 3 brennenden Lichtbogens L erzielt werden. Während das sekundäre Schutzgas G₂ möglichst langsam in die Kammer 5 eingeströmt wird, um Verwirbelungen des sekundären Schutzgases G₂ zu vermeiden, wird das primäre Schutzgas G₁ mit einer relativ hohen Strömungsgeschwindigkeit v_{G1} durch den Schweißbrenner 4 geströmt, um die gewünschte Bündelung des primären Schutzgases G₁ und gewünschte Stabilisierung des Lichtbogens L erzielen zu können. Die relativ hohe Strömungsgeschwindigkeit v_{G1} bzw. Bündelung des primären Schutzgases G₁ wird in der Einrichtung 7 zur Bündelung des primären Schutzgases G₁ vorzugsweise durch eine stetige Verringerung des Querschnitts des Kanals 8 erzielt. Die Gestalt der Kammer 5 kann an die Geometrie des herzustellenden Formkörpers 2 entsprechend angepasst sein.

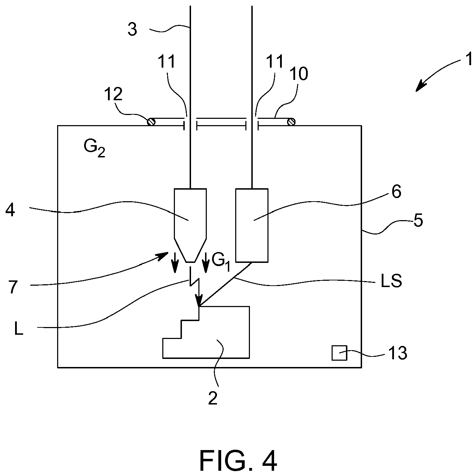

Um eine Bewegung des Schweißbrenners 4 zu ermöglichen, dennoch die Kammer 5 jedoch möglichst dicht zu halten, kann zumindest ein Deckel 10 mit einer Öffnung 11 für die Einbringung des Schweißbrenners 4 angeordnet sein, wobei der Deckel 10 gegenüber der Kammer 5 verschiebbar angeordnet ist. Zwischen dem verschiebbaren Deckel 10 und der Kammer 5 kann eine elastische Dichtung 12, beispielsweise ein Faltenbalg oder ein Industrierollo (s. Fig. 4), angeordnet sein.

In der Schutzgasatmosphäre des sekundären Schutzgases G₂ innerhalb der Kammer 5 kann der Formkörper 2 mit einem entsprechend stabilen Lichtbogen L hergestellt werden wodurch eine besonders hohe Genauigkeit und somit Auflösung des herzustellenden Formkörpers 2 auch ohne nachträglicher Bearbeitung folgt. Zur Stabilisierung des Lichtbogens L wird das primäre Schutzgas G₁ mit vorzugsweise hoher Strömungsgeschwindigkeit v_{G1} über den Schweißbrenner 4 zugeführt, wo es mit entsprechenden Einrichtungen 7 gebündelt wird. In einer weiteren Ausführungsform können für räumliche Bewegungen des Schweißbrenners 4 auch weitere verschiebbare Deckel 10 angeordnet sein.

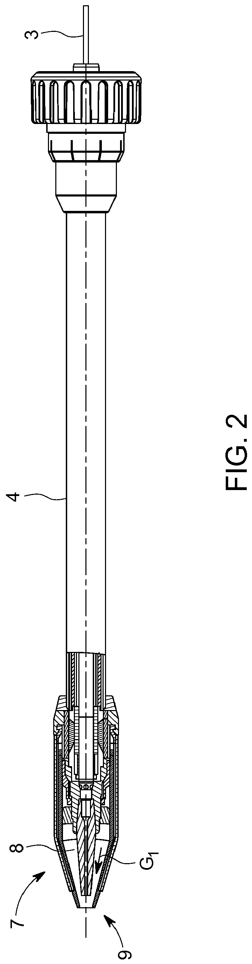

Fig. 2 zeigt den Schweißbrenner 4 gemäß Fig. 1 in teilweise geschnittener Darstellung in größerem Maßstab. Die Einrichtung 7 zur Bündelung des primären Schutzgases G₁ ist dabei durch einen in Richtung des herzustellenden Formkörpers 2 verjüngend ausgebildeten Kanal 8 für das primäre Schutzgas G₁ gebildet. Das drahtförmige metallische Ausgangsmaterial 3 wird über eine entsprechende Bohrung dem Schweißbrenner 4 und der Mündung 9 des Kanals 8 für das primäre Schutzgas G₁ zugeführt.

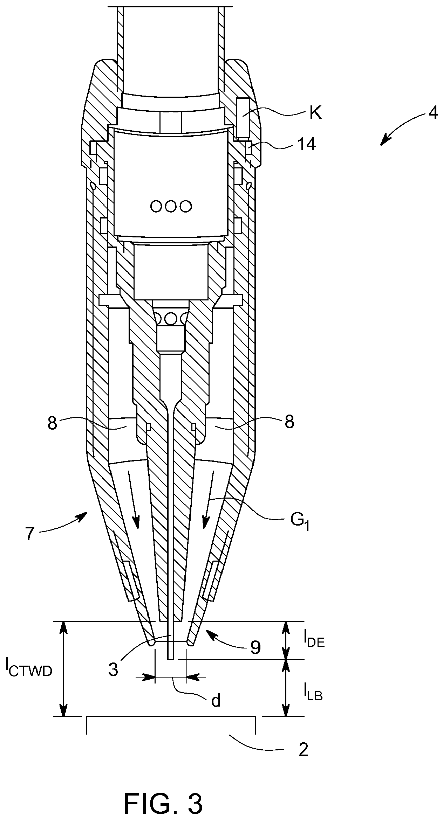

Der Detailansicht gemäß Fig. 3 kann die Form des Kanals 8 noch deutlicher entnommen werden. Der Durchmesser d der Mündung 9 des Kanals 8 für das primäre Schutzgas G₁ an der Öffnung der Gasdüse des Schweißbrenners 4 beträgt vorzugsweise 3 mm bis 10 mm, besonders bevorzugt 4 mm bis 6 mm. Durch die geringe Größe der Mündung 9 werden entsprechend hohe Strömungsgeschwindigkeiten v_{G1} für das primäre Schutzgas G₁ erzielt, beispielsweise Strömungsgeschwindigkeiten v_{G1} im Bereich zwischen 2 l/min und 15 l/min, vorzugsweise 6 1/min und 10 1/min, wodurch eine besonders optimale Bündelung des primären Schutzgasstroms G₁ resultiert. Der zwischen dem Kontaktrohr für das drahtförmige metallische Ausgangsmaterial 3 und der Gasdüse des Schweißbrenners 4 entstehende Ringspalt, also der Querschnitt des Kanals 8 für das primäre Schutzgas G₁ nimmt zur Mündung 9 hin vorzugsweise stetig ab. Der Ringspalt bei der Mündung 9 (da durch die Mündung 9 das drahtförmige metallische Ausgangsmaterial 3 gefördert wird, spricht man auch hier von einem Ringspaltquerschnitt) hat somit den kleinsten Querschnitt. Dadurch wird die Strömungsgeschwindigkeit v_{G1} des primären Schutzgases G₁ vorzugsweise stetig erhöht und dadurch der zwischen dem Ende des drahtförmigen metallischen Ausgangsmaterials 3 und dem herzustellenden Formkörper 2 brennende Lichtbogen L optimal stabilisiert. Der Abstand L_{CTWD} (Contact Tip to Work Distance) von der Spitze des Kontaktrohres des Schweißbrenners 4 zur Oberfläche des zu bildenden Formkörpers 2 beträgt vorzugsweise zwischen 7 mm und 17 mm, besonders bevorzugt zwischen 10 mm und 15 mm. Dieser Abstand L_{CTWD} berechnet sich aus der Länge l_{DE} des freien Endes des drahtförmigen metallischen Ausgangsmaterials 3 und der Länge l_{LB} des Lichtbogens L gemäß l_{CTWD} = l_{DE} + l_{LB}. Dabei ist die Länge l_{DE} zu einem Teil innerhalb des Schweißbrenners 4 bzw. dessen Gasdüse und zu einem weiteren Teil außerhalb des Schweißbrenners 4 bzw. dessen Gasdüse angeordnet. Das Verhältnis dieser Teile der Länge l_{DE} kann beispielsweise 50:50 betragen, jedoch selbstverständlich auch individuell eingestellt werden. Die Grundplatte, auf welcher der zu bildende Formkörper 2 erzeugt wird, kann auch gekühlt sein. Durch diese Kühlung kann eine raschere Abkühlung des Formkörpers 2 erreicht werden. Die allfälligen Kühlkanäle in der Einrichtung 7 zur Bündelung des primären Schutzgases G₁ kühlen zusätzlich das primäre Schutzgas G₁, wodurch das primäre Schutzgas G₁ mit einer geringeren Temperatur auf der Oberfläche des zu bildenden Formkörpers 2 auftrifft und dadurch eine bessere Kühlwirkung erzielt wird. Durch die Kühlwirkung des Kühlfluids K im Kühlkanal 14 des Schweißbrenners 4 kann zusätzlich der Verschleiß des Kontaktrohres des Schweißbrenners reduziert werden. Die Verwendung einer reversierenden Vorschubeinheit für das drahtförmige metallische Ausgangsmaterial 3 reduziert Schweißspritzer. Zusätzlich ist durch die Verwendung einer reversierenden Vorschubeinheit für das drahtförmige metallische Ausgangsmaterial 3 der Wärmeeintrag in den Formkörper 2 geringer, wodurch höhere Abschmelzraten möglich sind.

Fig. 4 zeigt ein Blockschaltbild einer weiteren Ausführungsform einer Vorrichtung 1 zur additiven Fertigung eines Formkörpers 2 aus Metall, wobei gesetzlich zum bereits oben beschriebenen Schweißbrenner 4 eine Lasereinheit 6 zur Erzeugung eines Laserstrahls LS zur Stabilisierung des Lichtbogens L vorgesehen ist. Weiters ist in Fig. 4 ein Gassensor 13 innerhalb der Kammer 5 angeordnet, um die Schutzgasatmosphäre durch das sekundäre Schutzgas G₂ detektieren zu können. Im Falle einer zu hohen Konzentration an Restsauerstoff in der Vorrichtung 1 können entsprechende Fehlermeldungen ausgegeben werden.

## Patentansprüche

1. Verfahren zur additiven Fertigung eines Formkörpers (2) aus Metall durch Aufschmelzen eines drahtförmigen metallischen Ausgangsmaterials (3) mittels eines in einem Schweißbrenner (4) erzeugten Lichtbogens (L) innerhalb einer Kammer (5) mit einem sekundären Schutzgas (G₂), **dadurch gekennzeichnet, dass** der Schweißbrenner (4) zur Umströmung des Lichtbogens (L) von einem primären Schutzgas (G₁) durchströmt wird, wobei das primäre Schutzgas (G₁) gebündelt wird.

2. Verfahren nach Anspruch 1, **dadurch gekennzeichnet, dass** das primäre Schutzgas (G₁) mit einer Strömungsgeschwindigkeit (v_{G1} von 2 1/min bis 15 1/min, vorzugsweise von 6 1/min bis 10 l/min, in den Schweißbrenner (4) eingeströmt wird.

3. Verfahren nach einem der Ansprüche 1 oder 2, **dadurch gekennzeichnet, dass** der Schweißbrenner (4) mit einem Kühlfluid (K) gekühlt wird.

4. Verfahren nach einem der Ansprüche 1 bis 3, **dadurch gekennzeichnet, dass** das drahtförmige metallische Ausgangsmaterial (3) mit einer konstanten Drahtfördergeschwindigkeit (v_{d}) in Richtung Formkörper (2) gefördert wird.

5. Verfahren nach einem der Ansprüche 1 bis 3, **dadurch gekennzeichnet, dass** das drahtförmige metallische Ausgangsmaterial (3) mit einer reversierenden Drahtfördergeschwindigkeit (v_{d}) in Richtung Formkörper (2) gefördert bzw. vom Formkörper (2) wegbewegt wird.

6. Verfahren nach einem der Ansprüche 1 bis 5, **dadurch gekennzeichnet, dass** als primäres Schutzgas (G₁) und bzw. oder als sekundäres Schutzgas (G₂) ein inertes Gas, beispielsweise Argon oder Helium, verwendet wird.

7. Verfahren nach einem der Ansprüche 1 bis 6, **dadurch gekennzeichnet, dass** der Lichtbogen (L) durch einen in einer Lasereinheit (6) erzeugten Laserstrahl (LS) stabilisiert wird.

8. Vorrichtung (1) zur additiven Fertigung eines Formkörpers (2) aus Metall durch Aufschmelzen eines drahtförmigen metallischen Ausgangsmaterials (3) mittels eines in einem Schweißbrenner (4) erzeugten Lichtbogens (L) innerhalb einer Kammer (5) mit einem sekundären Schutzgas (G₂), **dadurch gekennzeichnet, dass** der Schweißbrenner (4) zur Durchströmung mit einem primären Schutzgas (G₁) zur Umströmung des Lichtbogens (L) ausgebildet ist, wobei eine Einrichtung (7) zur Bündelung des primären Schutzgases (G₁) vorgesehen ist.

9. Vorrichtung (1) nach Anspruch 8, **dadurch gekennzeichnet, dass** die Einrichtung (7) zur Bündelung des primären Schutzgases (G₁) im Schweißbrenner (4) durch einen in Richtung Formkörper (2) verjüngend ausgebildeten Kanal (8) für das primäre Schutzgas (G₁) gebildet ist.

10. Vorrichtung (1) nach Anspruch 9, **dadurch gekennzeichnet, dass** der Durchmesser (d) der Mündung (9) des Kanals (8) für das primäre Schutzgas (G₁) zwischen 3 mm und 10 mm, vorzugsweise 4 mm bis 6 mm, beträgt.

11. Vorrichtung (1) nach einem der Ansprüche 8 bis 10, **dadurch gekennzeichnet, dass** die Kammer (5) mit dem sekundären Schutzgas (G₂) zumindest einen Deckel (10) mit einer Öffnung (11) für die Einbringung des Schweißbrenners (4) aufweist, wobei der zumindest eine Deckel (10) gegenüber der Kammer (5) verschiebbar angeordnet ist.

12. Vorrichtung (1) nach Anspruch 11, **dadurch gekennzeichnet, dass** zwischen dem verschiebbaren Deckel (10) und der Kammer (5) eine elastische Dichtung (12), beispielsweise ein Faltenbalg oder ein Industrierollo, angeordnet ist.

13. Vorrichtung (1) nach einem der Ansprüche 8 bis 11, **dadurch gekennzeichnet, dass** im Schweißbrenner (4) zumindest ein Kühlkanal (14) zur Führung eines Kühlfluids (K) vorgesehen ist.

14. Vorrichtung (1) nach einem der Ansprüche 8 bis 13, **dadurch gekennzeichnet, dass** der Abstand (1_{CTWD}) zwischen der Spitze eines Kontaktrohres des Schweißbrenners (4) und dem zu bildenden Formkörper (2) zwischen 7 mm und 17 mm, vorzugsweise zwischen 10 mm und 15 mm, beträgt.

15. Vorrichtung (1) nach einem der Ansprüche 8 bis 14, **dadurch gekennzeichnet, dass** eine Lasereinheit (6) zur Erzeugung eines Laserstrahls (LS) zur Stabilisierung der Lichtbogens (L) vorgesehen ist.
